# EUROPÄISCHE PATENTANMELDUNG

(11) **EP 4 785 786 A1**
(43) Veröffentlichungstag der Anmeldung: **05.08.2026**
(21) Anmeldenummer: 25155134.7
(22) Anmeldetag: 31.01.2025
(51) Int. Cl.: A01M 1/02, A01M 1/04

(54) **ÜBERWACHEN VON GLIEDERFÜSSERN**

(71) Anmelder: Bayer Aktiengesellschaft, 51373 Leverkusen (DE)
(72) Erfinder: TEMPEL, Matthias, 50935 Köln (DE); BORN, Fabian Christian, 57319 Bad Berleburg (DE)
(74) Vertreter: BIP Patents

(57) **Zusammenfassung**

Die vorliegende Offenbarung befasst sich mit dem Überwachen von Gliederfüßern.

Die hier offengelegten Verfahren und Vorrichtungen beziehen sich auf die Überwachung von Gliederfüßern in einem Gebiet.

## Beschreibung

### TECHNISCHES GEBIET

Die vorliegende Offenbarung befasst sich mit dem Überwachen von Gliederfüßern.

Die hier offengelegten Verfahren und Vorrichtungen beziehen sich auf die Überwachung von Gliederfüßern in einem Gebiet.

### HINTERGRUND

Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Wachstums führen, Saug- und Fraßschäden verursachen sowie Viruskrankheiten übertragen. Auf diese Weise werden beispielsweise erhebliche Ertrags- und Qualitätsverluste beim Anbau von Kulturpflanzen verursacht.

In der modernen Landwirtschaft spielt die Erfassung und Erkennung von Schädlingen innerhalb von landwirtschaftlich genutzten Flächen eine wichtige Rolle.

Gliederfüßer können jedoch auch eine entscheidende Rolle bei der Unterstützung und Verbesserung der landwirtschaftlichen Produktivität und Nachhaltigkeit spielen. Viele Gliederfüßer, insbesondere Bienen und Schmetterlinge, sind wichtige Bestäuber für eine Vielzahl von Nutzpflanzen.

Einige Gliederfüßer können auf natürliche Weise die Populationen von Schadorganismen kontrollieren. Zum Beispiel machen Marienkäfer, Florfliegen und parasitäre Wespen Jagd auf Blattläuse, Raupen und andere Schädlinge, die Nutzpflanzen schädigen können. Diese biologische Bekämpfung reduziert den Bedarf an chemischen Pestiziden, die schädlich für die Umwelt und die menschliche Gesundheit sein können.

Einige Gliederfüßer, wie bestimmte Käfer und Ameisen, tragen zur Bodengesundheit bei, indem sie organische Stoffe abbauen, den Boden belüften und den Nährstoffkreislauf fördern. Gesunde Böden sind für eine produktive Landwirtschaft von grundlegender Bedeutung, da sie das Pflanzenwachstum und die Wasserregulierung unterstützen.

### ZUSAMMENFASSUNG

Ein erster Gegenstand der vorliegenden Offenbarung ist eine Vorrichtung umfassend:
- einen Sammelbereich und
- eine Detektionseinheit zum Detektieren von Gliederfüßern in dem Sammelbereich;
dadurch gekennzeichnet, dass der Sammelbereich so gestaltet ist, dass von dem Sammelbereich elektromagnetische Strahlung im infraroten, sichtbaren und/oder ultravioletten Bereich des elektromagnetischen Spektrums mit einer veränderlichen spektralen Zusammensetzung ausgesandt wird.

Ein weiterer Gegenstand der vorliegenden Offenbarung ist ein Verfahren umfassend
- Positionieren einer Detektionseinheit zum Detektieren von Gliederfüßern in einem Gebiet;
- Erfassen von Signalen eines oder mehrerer Gliederfüßer in einem Sammelbereich mit Hilfe der Detektionseinheit;
- Detektieren und/oder Identifizieren und/oder Zählen der Gliederfüßer in dem Sammelbereich und/oder Ermitteln eines Biodiversitätswerts anhand der erfassten Signale;
dadurch gekennzeichnet, dass der Sammelbereich so gestaltet ist, dass von dem Sammelbereich elektromagnetische Strahlung im infraroten, sichtbaren und/oder ultravioletten Bereich des elektromagnetischen Spektrums mit einer veränderlichen spektralen Zusammensetzung ausgesandt wird.

### DETAILLIERTE BESCHREIBUNG

Im Folgenden werden verschiedene Ausführungsbeispiele näher erläutert, ohne zwischen den Gegenständen der Offenbarung zu unterscheiden. Im Gegenteil, die folgenden Erläuterungen sollen analog für alle Aspekte der Offenbarung gelten, unabhängig davon, in welchem Kontext sie auftreten.

Wenn in der vorliegenden Beschreibung oder in den Ansprüchen Schritte in einer bestimmten Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder parallel zueinander ausgeführt werden können, es sei denn, ein Schritt baut auf einem anderen auf, was voraussetzt, dass der aufbauende Schritt anschließend ausgeführt wird (was jedoch im Einzelfall klar ist). Die angegebenen Reihenfolgen sind daher beispielhafte Ausführungsformen der vorliegenden Offenbarung.

Wie hierin verwendet, sollen die Artikel "ein" und "eine" einen oder mehrere Gegenstände umfassen und werden austauschbar mit "ein oder mehrere" und "mindestens ein" verwendet. Wie in der Beschreibung und den Ansprüchen verwendet, umfasst die Singularform von "ein", "eine", "der", "die" und "das" die Pluralform (d.h. mehrere Bezugsgrößen), es sei denn, aus dem Kontext geht eindeutig etwas anderes hervor. Wenn nur ein Gegenstand gemeint ist, werden die Begriff "nur ein", "ausschließlich ein", "lediglich ein" oder ähnliche Formulierungen verwendet. Außerdem sind die Begriffe "hat", "haben", "haben" oder ähnliche Begriffe in der hier verwendeten Form als offene Begriffe zu verstehen. Darüber hinaus soll der Ausdruck "basierend auf" "zumindest teilweise basierend auf" bedeuten, sofern nicht ausdrücklich anders angegeben.

Die in dieser Offenbarung verwendeten Begriffe haben die Bedeutung, die diese Begriffe im Stand der Technik haben, insbesondere in dem in dieser Offenbarung zitierten Stand der Technik, sofern nicht anders angegeben.

Ein Gegenstand der vorliegenden Offenbarung ist eine Vorrichtung.

Die Vorrichtung umfasst eine Detektionseinheit für Gliederfüßer. Mit einer solchen Detektionseinheit kann die Anwesenheit von Gliederfüßern in einem Gebiet festgestellt werden. Es ist möglich, dass die Vorrichtung mehrere Detektionseinheiten umfasst.

"Gliederfüßer" sind eine vielfältige Gruppe wirbelloser Tiere, die den Stamm der Arthropoda bilden. Gliederfüßer werden in mehrere Hauptgruppen (Unterstämme und Klassen) eingeteilt, darunter Insekten und Spinnentiere.

In einer Ausführungsform der vorliegenden Offenbarung bezieht sich der Begriff Gliederfüßer ausschließlich auf Insekten und Spinnentiere.

In einer anderen Ausführungsform der vorliegenden Offenbarung bezieht sich der Begriff Gliederfüßer ausschließlich auf Insekten.

In einer weiteren Ausführungsform der vorliegenden Offenbarung bezieht sich der Begriff Gliederfüßer ausschließlich auf erwachsene Insekten.

In einer weiteren Ausführungsform der vorliegenden Offenbarung bezieht sich der Begriff Gliederfüßer ausschließlich auf Insekten in Form von Raupen.

In einer weiteren Ausführungsform der vorliegenden Offenbarung bezieht sich der Begriff Gliederfüßer ausschließlich auf fliegende Insekten. Fliegende Insekten sind solche, die fliegen können, und nicht notwendigerweise Insekten, die zum Zeitpunkt ihrer Detektion fliegen.

In einer anderen Ausführungsform der vorliegenden Offenbarung bezieht sich der Begriff Gliederfüßer ausschließlich auf Spinnentiere.

In einer anderen Ausführungsform der vorliegenden Offenbarung bezieht sich der Begriff Gliederfüßer ausschließlich auf Milben.

Die Detektionseinheit dient dem Detektieren von Gliederfüßern in einem Sammelbereich. Der Sammelbereich ist ein Bestandteil der Vorrichtung.

Der Sammelbereich ist ein Bereich, der von Gliederfüßern aufgesucht werden kann. Der Sammelbereich ist üblicherweise ein Bereich, in dem sich Gliederfüßer aufhalten müssen, um von der Detektionseinheit erfasst zu werden. Der Sammelbereich kann beispielsweise das Sichtfeld einer optischen Kamera in einem Fokusabstand zur Kamera sein oder umfassen.

Es ist denkbar, dass ein oder mehrere Sammelbereiche in Reichweite der Detektionseinheit vorliegen. Im Falle von mehreren Sammelbereichen ist es möglich, dass diese in unterschiedliche Richtungen ausgerichtet sind und/oder für unterschiedliche Gliederfüßer bestimmt sind.

Der Sammelbereich kann eine Fläche sein oder umfassen, die eben oder gekrümmt sein kann. Der Sammelbereich kann ein Volumen sein oder umfassen.

Die Größe des Sammelbereichs hängt in der Regel von der Größe der Gliederfüßer ab, die sich in dem Gebiet aufhalten und deren Anwesenheit mit Hilfe der Detektionseinheit festgestellt werden soll. Der Sammelbereich ist in der Regel größer als die Gliederfüßer, beispielsweise mehr als zehnmal, mehr als zwanzigmal oder mehr als hundertmal so groß.

Die Größe des Sammelbereichs hängt in der Regel ferner üblicherweise von der Reichweite der Detektionseinheit ab. Wenn es sich bei der Detektionseinheit beispielsweise um eine optische Kamera handelt, hängt die Größe des Sammelbereichs in der Regel von der Größe des Bildsensors, der Tiefenschärfe, dem Sichtfeld sowie den verwendeten Blenden und Linsen ab.

In einer Ausführungsform der vorliegenden Offenbarung umfasst der Sammelbereich eine ebene Fläche. Die Fläche kann dreieckig, viereckig (z.B. rechteckig oder quadratisch), fünfeckig, sechseckig oder allgemein n-eckig sein, wobei n eine ganze Zahl größer als zwei ist. Die Fläche kann auch rund oder elliptisch sein oder eine andere Form haben. In einer Ausführungsform der vorliegenden Offenbarung ist die Fläche eben und rechteckig, wobei die Ecken abgerundet sein können, und erstreckt sich senkrecht zur Richtung der Schwerkraft. In einer Ausführungsform der vorliegenden Offenbarung hat die Fläche eine Ausdehnung im Bereich von 100 mm x 200 mm bis 250 mm x 250 mm. In einer Ausführungsform der vorliegenden Offenbarung hat die Fläche eine Ausdehnung im Bereich von 100 mm x 200 mm bis 250 mm x 250 mm. In einer Ausführungsform der vorliegenden Offenbarung hat die Fläche eine Ausdehnung im Bereich von 100 mm x 160 mm bis 130 mm x 190 mm. In einer Ausführungsform der vorliegenden Offenbarung hat die Fläche eine Ausdehnung im Bereich von 160 mm x 210 mm bis 180 mm x 230 mm.

Der Sammelbereich ist so gestaltet, dass von dem Sammelbereich veränderliche elektromagnetische Strahlung im infraroten (780 nm bis 1000 µm), sichtbaren (380 nm bis 780 nm) und/oder ultravioletten Bereich (100 nm bis 380 nm) des elektromagnetischen Spektrums ausgesandt wird.

Der Begriff "ausgesandt" kann bedeuten, dass die elektromagnetische Strahlung von dem Sammelbereich erzeugt wird; der Begriff "ausgesandt" kann bedeuten, dass elektromagnetische Strahlung vom Sammelbereich reflektiert, gestreut und/oder gebeugt wird.

Die elektromagnetische Strahlung ist veränderlich. Der Begriff "veränderlich" bezieht sich auf die Intensitätsverteilung der Wellenlängen der elektromagnetischen Strahlung. Mit anderen Worten: die elektromagnetische Strahlung kann mehrere (mindestens zwei) Arten von elektromagnetischer Strahlung umfassen, wobei sich die Arten in ihrer spektralen Zusammensetzung unterscheiden. Die elektromagnetische Strahlung jeder Art kann monochromatisch oder polychromatisch sein.

In einer Ausführungsform der vorliegenden Offenbarung ist der Sammelbereich so ausgestaltet, dass der Sammelbereich die veränderliche elektromagnetische Strahlung aktiv ausstrahlt. "Aktiv" bedeutet, dass der Sammelbereich selbst elektromagnetische Strahlung erzeugt. Mit anderen Worten: der Sammelbereich kann selbstleuchtend sein.

Der Sammelbereich kann eine oder mehrere Quellen für elektromagnetische Strahlung umfassen. Die mindestens eine Quelle kann veränderliche elektromagnetische Strahlung aussenden.

Es ist möglich, dass verschiedene Quellen vorhanden sind, die jede für sich elektromagnetische Strahlung mit einer definierten spektralen Zusammensetzung emittiert.

Eine solche Quelle für elektromagnetische Strahlung kann beispielsweise eine Leuchtdiode (LED, *light emitting diode*) sein oder umfassen.

Eine Leuchtdiode (LED) ist ein Halbleiterbauelement, das elektromagnetische Strahlung im infraroten, sichtbaren und/oder ultravioletten Bereich aussendet, wenn es von elektrischem Strom durchflossen wird. Das Halbleiterbauelement umfasst üblicherweise einen so genannten pn-Übergang. Ein pn-Übergang entsteht beispielsweise an der Grenze zwischen einem p- und einem n-Halbleitermaterial. Diese beiden Halbleitermaterialien unterscheiden sich durch die Art der Ladungsträger, die in ihnen vorherrschen: p-Halbleiter weisen bewegliche positive Ladungsträger (Löcher) auf, während n-Halbleiter bewegliche negative Ladungsträger (Elektronen) aufweisen.

Die Erzeugung der elektromagnetischen Strahlung in einer LED ist üblicherweise das Ergebnis einer Elektrolumineszenz, einem Phänomen, bei dem ein Material als Reaktion auf den Durchgang von elektrischem Strom oder auf ein elektrisches Feld Licht aussendet. Wenn Spannung an eine LED angelegt wird, bewegen sich Elektronen von der n-Seite zur p-Seite des pn-Übergangs. Während sich die Elektronen über den Übergang bewegen, rekombinieren sie mit Löchern und setzen dabei Energie in Form von Photonen frei. Die Energie (und damit die spektrale Zusammensetzung) der emittierten Photonen wird durch die Bandlücke des Halbleitermaterials bestimmt.

Es ist ferner möglich, dass ein Filter vorhanden ist, der in den Strahlengang einer Quelle für elektromagnetische Strahlung gebracht werden kann. Ein solcher Filter kann so ausgestaltet sein, dass er bestimmte Wellenlängen elektromagnetischer Strahlung selektiv durchlässt, absorbiert und/oder reflektiert und so die spektrale Zusammensetzung der auf den Filter treffenden elektromagnetischen Strahlung verändert.

Ein solcher Filter kann ein Absorptionsfilter sein. Ein Absorptionsfilter absorbiert bestimmte Wellenlängen der elektromagnetischen Strahlung, während andere durchgelassen werden. Das Material des Absorptionsfilters und seine chemische Zusammensetzung bestimmen üblicherweise, welche Wellenlängen absorbiert werden.

Ein solcher Filter kann ein Interferenzfilter, auch als dichroitischer Filter bezeichnet, sein. Ein Interferenzfilter kann beispielsweise das Prinzip der Dünnschichtinterferenz nutzen, um verschiedene Wellenlängen selektiv zu übertragen oder zu reflektieren. Ein solcher Interferenzfilter umfasst üblicherweise mehrere dünne Schichten dielektrischer Materialien mit jeweils unterschiedlichem Brechungsindex. Durch definierte Gestaltung der Dicke und Abfolge dieser Schichten können Filter mit sehr präzisen Übertragungs- und Reflexionseigenschaften für bestimmte Wellenlängenbereiche erreicht werden.

Es ist ferner möglich, dass eine Quelle für elektromagnetische Strahlung vorhanden ist, bei der die spektrale Zusammensetzung einstellbar ist.

Die mindestens eine Quelle für elektromagnetische Strahlung kann eine RBG-LED sein. Eine solche RGB-LED umfasst üblicherweise mehrere LEDs, die elektromagnetische Strahlung unterschiedlicher spektraler Zusammensetzung emittieren. Eine solche RGB-LED kombiniert üblicherweise rotes, grünes und blaues Licht in unterschiedlichen Intensitäten, um ein breites Farbspektrum, einschließlich weißem Licht, zu erzeugen. Durch die Anpassung der relativen Helligkeit jeder Farbkomponente können diese LEDs nahezu jede Farbe erzeugen.

Die mindestens eine Quelle für elektromagnetische Strahlung kann eine RGBW-LED sein. Eine solche RGBW-LED fügt der Standard-RGB-Konfiguration eine weiße LED hinzu, wodurch eine reinere und effizientere Weißlichtproduktion ermöglicht wird.

Die mindestens eine Quelle für elektromagnetische Strahlung kann eine RGBA-LED sein. Eine solche RGBA-LEDs umfasst eine rote, grüne, blaue und bernsteinfarbene LED.

Die mindestens eine Quelle für elektromagnetische Strahlung kann eine OLED (organische LED) sein. Eine solche OLED umfasst üblicherweise mehrere organische Dünnfilme zwischen zwei Leitern. Wenn elektrischer Strom angelegt wird, wird elektromagnetische Strahlung abgegeben. Eine OLED umfasst üblicherweise ein Substrat (Basis), auf der die OLED aufgebaut ist. Das Substrat kann aus verschiedenen Materialien bestehen, einschließlich Kunststoff und/oder Glas bestehen. Auf oder über dem Substrat liegt üblicherweise eine Anode (positive Elektrode). Die Anodenschicht ist üblicherweise transparent. Ihre Aufgabe ist es, Elektronen zu entfernen (Elektronenlöcher hinzuzufügen), wenn ein Strom angelegt wird. Eine Lochinjektionsschicht injiziert Löcher in eine Lochtransportschicht. Die Lochtransportschicht ist üblicherweise neben der Anode gelegen und transportiert Löcher von der Anode zur Emissionsschicht. Sie hilft bei der Rekombination von Löchern und Elektronen. Die Emissionsschicht umfasst organische Moleküle oder Polymere, die Licht emittieren, wenn Strom angelegt wird. Die spektrale Zusammensetzung der elektromagnetischen Strahlung hängt von der Art des verwendeten organischen Materials ab. Eine Elektronentransportschicht transportiert Elektronen von der Kathode zur Emissionsschicht, wo sie mit den Löchern rekombinieren können, um Licht zu erzeugen. Die Kathode (negative Elektrode) injiziert Elektronen, wenn ein Strom durch die OLED fließt. In einigen OLEDs kann die Kathode so gestaltet sein, dass sie die Emission von Licht verstärkt. Wenn eine Spannung über die OLED angelegt wird, werden Elektronen von der Kathode und Löcher (positive Ladungen) von der Anode injiziert. Die Elektronen und Löcher treffen sich in der Emissionsschicht, wo sie rekombinieren und Energie in Form von Licht freisetzen. Die spezifischen Materialien, die in der Emissionsschicht verwendet werden, bestimmen die spektrale Zusammensetzung der erzeugten elektromagnetischen Strahlung.

Die mindestens eine Quelle für elektromagnetische Strahlung kann eine Quantenpunkt-LED (QLED, *quantum dot LED*) sein. Eine solche QLED verwenden Quantenpunkte, üblicherweise Halbleiterpartikel im Nanomaßstab, die bei Beleuchtung durch eine externe Quelle für elektromagnetische Strahlung selbst elektromagnetische Strahlung einer definierten spektralen Zusammensetzung abgeben. Durch Änderung der Größe der Quantenpunkte kann die spektrale Zusammensetzung bestimmt werden.

In einer Ausführungsform der vorliegenden Offenbarung wird von dem Sammelbereich elektromagnetische Strahlung infolge einer Bestrahlung mit elektromagnetischer Strahlung ausgesandt. Mit anderen Worten: der Sammelbereich ist passiv und erzeugt selbst keine elektromagnetische Strahlung. Die von dem Sammelbereich ausgesandte elektromagnetische Strahlung kommt aufgrund der Wechselwirkung des Sammelbereichs mit elektromagnetischer Strahlung, die von einer externen Quelle auf den Sammelbereich trifft, zustande.

Die externe Quelle für elektromagnetische Strahlung kann eine Quelle für natürliche elektromagnetische Strahlung (z.B. Tageslicht, d.h. direktes und/oder reflektiertes und/oder gestreutes Sonnenlicht) sein.

In einer Ausführungsform ist die externe Quelle für elektromagnetische Strahlung eine Quelle für künstliche elektromagnetische Strahlung. In einer solchen Ausführungsform umfasst die Vorrichtung mindestens eine Quelle für elektromagnetische Strahlung, die elektromagnetische Strahlung auf den Sammelbereich sendet.

Als Quelle für künstliche elektromagnetische Strahlung kann jede der bereits oben genannten Quellen für elektromagnetische Strahlung verwendet werden, wie beispielsweise eine LED, RGB-LED, RGBW-LED, RGBA-LED, OLED und/oder QLED. Weitere Quellen für elektromagnetische Strahlung sind Glühlampen, Leuchtstofflampen, Halogenlampen, Hochdruckentladungslampen, Neonröhren, Xenonlampen, Plasmalampen und/oder Laser.

Es können verschiedene Quellen für elektromagnetische Strahlung verwendet werden, die elektromagnetische Strahlung verschiedener spektraler Zusammensetzung auf den Sammelbereich senden.

Es können ein oder mehrere Filter (z.B. Absorptionsfilter und/oder Interferenzfilter) verwendet werden, um die spektrale Zusammensetzung von elektromagnetischer Strahlung zu verändern, bevor sie auf den Sammelbereich trifft.

Es ist möglich, dass der Sammelbereich eine veränderliche Oberfläche umfasst. Es können beispielsweise austauschbare Materialien z.B. in Form einer Karte oder Folie vorhanden sein. Die Materialien können so gestaltet sein, dass sie in definierter Weise mit der eintreffenden elektromagnetischen Strahlung wechselwirken, und dass infolge dieser Wechselwirkung elektromagnetische Strahlung mit einer charakteristischen spektralen Zusammensetzung von dem Sammelbereich ausgesandt wird.

Bei den austauschbaren Materialien kann es sich z.B. um eine Karte oder Tafel handeln, die in den Sammelbereich eingebracht und/oder auf eine Oberfläche des Sammelbereichs aufgebracht wird. Es ist möglich, dass ein Block mit einer Mehrzahl an Karten vorhanden ist, wobei die in dem Block zuoberst liegende Karte den Sammelbereich oder einen Teil davon bildet. Nach einer definierten Zeitspanne kann die zuoberst liegende Karte entfernt werden. Es tritt die darunter liegende Karte in Erscheinung, die die entfernte Karte als Sammelbereich oder Teil des Sammelbereichs ersetzt.

Es ist ferner möglich, dass bei einem Austausch der Materialien eine zuoberst liegende (erste) Karte dadurch ausgetauscht wird, dass eine andere (zweite) Karte darübergelegt wird. Die erste Karte kann von der zweiten Karte ganz oder teilweise überdeckt werden. Die zweite Karte kann aus einem Vorrat umfassend mehrere Karten stammen.

Es ist ferner möglich, dass die austauschbaren Materialien Folien sind.

Es ist ferner möglich, dass die austauschbaren Materialien verschiedene Abschnitte einer Folie sind. Es ist möglich, dass eine Folienrolle beim Austausch von Materialien teilweise abgewickelt wird und beim Abwickeln ein Folienabschnitt mit veränderten optischen Eigenschaften zum Vorschein kommt. Es ist möglich, dass ein Folienabschnitt, der von einem anderen Folienabschnitt ersetzt wird, auf eine (andere) Rolle aufgerollt wird.

In einer Ausführungsform der vorliegenden Offenbarung erfolgt ein Austausch von Materialien automatisch, d.h. ohne Zutun eines Menschen.

Die austauschbaren Materialien können beispielsweise unterschiedliche Farbstoffe umfassen. Ein solcher Farbstoff kann einen Teil der eintreffenden elektromagnetischen Strahlung absorbieren, sodass die von dem Sammelbereich reflektierte und/oder gestreute und/oder gebeugte elektromagnetische Strahlung eine andere spektrale Zusammensetzung aufweist als die eintreffende elektromagnetische Strahlung.

Die eintreffende elektromagnetische Strahlung kann beispielsweise weißes Licht sein. Der Farbstoff kann einen Teil des weißen Lichts absorbieren, wobei die in dem weißen Licht vorkommenden Wellenlängen in unterschiedlichem Maße absorbiert werden. Ein Teil der eingehenden elektromagnetischen Strahlung kann von dem Sammelbereich reflektiert oder gestreut werden. Durch die Absorption hat die zurückgesandte (z.B. reflektierte und/oder gestreute Strahlung) eine andere Intensitätsverteilung der Wellenlängen.

Die austauschbaren Materialien können beispielsweise unterschiedliche Beugungsstrukturen umfassen. Wenn elektromagnetische Strahlung auf eine solche Beugungsstruktur trifft, wird sie gebeugt, das heißt, ihre Ausbreitungsrichtung ändert sich. Die Beugung tritt besonders deutlich auf, wenn die Größe der Strukturen in oder auf den Materialien in der Nähe einer Wellenlänge der einfallenden elektromagnetischen Strahlung liegt. Dies führt dazu, dass verschiedene Wellenlängen in unterschiedliche Richtungen gebeugt werden. Die gebeugten elektromagnetischen Strahlen können sich überlagern und miteinander interferieren. Diese Interferenz kann konstruktiv oder destruktiv sein, je nachdem, welche Phasenunterschied die Strahlen zueinander haben.

In einer Ausführungsform der vorliegenden Offenbarung wird vom Sammelbereich elektromagnetische Strahlung mit einer zeitlich variierenden spektralen Zusammensetzung ausgesandt.

Es ist beispielsweise möglich, dass in einer ersten Zeitspanne elektromagnetische Strahlung mit einer ersten spektralen Zusammensetzung ausgesandt wird und in einer zweiten Zeitspanne elektromagnetische Strahlung mit einer zweiten spektralen Zusammensetzung ausgesandt wird. Die erste spektrale Zusammensetzung ist dabei verschieden von der zweiten spektralen Zusammensetzung. Die zweite Zeitspanne kann zeitlich auf die erste Zeitspanne folgen. Es ist aber auch möglich, dass zwischen der ersten Zeitspanne und der zweiten Zeitspanne eine oder mehrere weitere Zeitspannen liegen. Die erste Zeitspanne und die zweite Zeitspanne können die gleiche Länge oder verschiedene Längen aufweisen. Es ist möglich, dass mehr als zwei Zeitspannen vorliegen, wobei in jeder Zeitspanne elektromagnetische Strahlung einer anderen spektralen Zusammensetzung ausgesandt wird. Es ist auch möglich, dass während einer Zeitspanne keine elektromagnetische Strahlung von dem Sammelbereich ausgesandt wird.

Die Länge jeder Zeitspanne kann beispielsweise eine oder mehrere Millisekunden, eine oder mehrere Sekunden, eine oder mehrere Minuten und/oder eine oder mehrere Stunden betragen.

Die Länge einer jeden Zeitspanne kann gleichbleibend oder variabel sein. Die Länge kann beispielsweise über einen Zyklus von 24 Stunden variieren. Es ist auch möglich, dass von dem Sammelbereich nicht dauerhaft elektromagnetische Strahlung ausgesandt wird.

Die veränderliche spektrale Zusammensetzung der von dem Sammelbereich ausgesandten elektromagnetischen Strahlung kann so gestaltet sein, dass unterschiedliche Gliederfüßer angelockt werden. Mit anderen Worten: die elektromagnetische Strahlung kann als Lockmittel verwendet werden. In verschiedenen Zeitspannen können verschiedene Gliederfüßer mit elektromagnetischer Strahlung unterschiedlicher spektraler Zusammensetzung angelockt werden.

Bienen werden üblicherweise von blauen und/oder violetten Blüten angezogen. Schmetterlinge werden üblicherweise von leuchtenden Farben wie Rot, Gelb, Orange, Rosa und/oder Lila angezogen. Motten sind in der Regel nachtaktiv und werden weniger von hellen Farben als von weißem und/oder ultraviolettem Licht angezogen. Viele Fliegen werden von weißen, gelben und/oder blauen Oberflächen angezogen. Weiße Fliegen werden üblicherweise von der Farbe Gelb angezogen. Blattläuse werden üblicherweise von Grün und/oder Gelb angezogen. Moskitos werden eher von dunklen Farben wie Schwarz und/oder Rot angezogen.

Anstelle des Anlockens von Gliederfüßern oder neben dem Anlocken von Gliederfüßern kann elektromagnetische Strahlung mit einer variierenden spektralen Zusammensetzung auch verwendet werden, um die Sichtbarkeit von Gliederfüßern vor ihrem Hintergrund zu verbessern. Fluoreszierende elektromagnetische Strahlung kann verwendet werden, um bestimmte Teile von Gliederfüßern zum Leuchten bringen und so ihre Detektion, Erkennung und/oder Quantifizierung zu erleichtern.

Der Sammelbereich kann ein Muster umfassen. Ein solches Muster kann (wie die spektrale Zusammensetzung der von dem Sammelbereich ausgesandten elektromagnetischen Strahlung) zeitlich veränderlich sein. Ein solches Muster kann synchron zur spektralen Zusammensetzung zeitlich variiert werden oder unabhängig dazu.

Muster können beispielsweise eine Rolle beim Anlocken von Gliederfüßern spielen, beispielsweise in Verbindung mit Farbe. Gliederfüßer können bestimmte Muster als Signale für Nahrungsquellen, Paarungsmöglichkeiten und/oder geeignete Lebensräume wahrnehmen.

Solche Muster können Blütenmuster sein oder umfassen. Viele Blüten umfassen Muster, die für Bestäuber sichtbar sind und sie zum Nektar leiten. Diese Muster, oft in Form von Linien oder kontrastierenden Farben, sind manchmal nur im ultravioletten Spektrum sichtbar.

Manche Pflanzen weisen Muster auf, die das Aussehen anderer Arten imitieren, um bestimmte Insekten anzulocken oder abzuschrecken. Orchideen können beispielsweise Muster aufweisen, die weiblichen Bienen und/oder Wespen ähneln, um männliche Tiere zur Bestäubung anzulocken.

Einige Gliederfüßer zeigen bestimmte Muster, um Partner anzulocken. Dazu gehören Flügelmuster bei Schmetterlingen und/oder Motten und/oder Körpermarkierungen bei anderen Gliederfüßern. Diese Muster sind oft artspezifisch und können komplizierte Designs, leuchtende Farben und/oder ultraviolette Markierungen enthalten, die für potenzielle Partner derselben Art attraktiv sind.

Bestimmte Insekten verwenden Muster, um geeignete Wirte für die Eiablage zu identifizieren. So suchen beispielsweise einige Schmetterlinge und Motten nach bestimmten Blattmustern und/oder -formen, die auf das Vorhandensein einer Wirtspflanze für ihre Larven hinweisen.

Muster können jedoch auch zur Desorientierung dienen. Streifenmuster können Insekten wie Fliegen desorientieren oder davon abhalten, in Bereiche einzudringen, in denen sie nicht erwünscht sind.

Der Sammelbereich kann optisch mit einem Muster versehen werden. Ein solches Muster kann beispielsweise auf eine Oberfläche des Sammelbereichs projiziert werden.

Ebenso ist es denkbar, dass ein oder mehrere austauschbare Materialien vorhanden sind, die über Muster verfügen.

Es können (weitere) Lockmittel vorhanden sein, um (spezifische) Gliederfüßer anzulocken. Als Lockmittel können ein Pheromon und/oder ein Duftstoff, der z.B. eine Nahrungsquelle vortäuscht, verwendet werden. Als Lockmittel können Geräusche, die beispielsweise paarungswillige Männchen und/oder Weibchen imitieren, eingesetzt werden.

Die Vorrichtung der vorliegenden Offenbarung kann eine Fangvorrichtung für Gliederfüßer sein oder eine solche umfassen.

Eine solche Fangvorrichtung kann einen mit einer Flüssigkeit gefüllten Behälter, z.B. eine Fangschale, umfassen, wie sie beispielsweise in WO2020/058175A1, WO2020/058170A1, WO2021/213824A1 oder WO2022/243150A1 beschrieben ist.

Eine solche Fangvorrichtung kann eine mit einem Klebemittel versehene Oberfläche umfassen, wie sie beispielsweise in WO2023/043871A1, WO2018/131853A1 oder WO2004/095919A2 beschrieben ist.

Eine solche Fangvorrichtung kann einen zeltartigen Rahmen umfassen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen.

Der Sammelbereich kann Mittel zum Immobilisieren von Gliederfüßern umfassen. Ein solches Mittel kann beispielsweise eine Flüssigkeit sein. Die Flüssigkeit kann Wasser sein oder umfassen. Der Flüssigkeit kann ein Mittel zur Erniedrigung der Oberflächenspannung zugesetzt sein kann.

Ein Mittel zum Immobilisieren von Gliederfüßern kann eine mit einem Klebemittel (z.B. einem Leim) versehene Oberfläche sein. Die Oberfläche kann beispielsweise von einer Karte oder Tafel oder Folie bereitgestellt werden.

Ein Mittel zum Immobilisieren von Gliederfüßern kann eine Vorrichtung sein, deren Wandungen einen Innenraum teilweise gegenüber der Außenwelt abschließen, wobei eine oder mehrere Öffnungen vorhanden sind. Durch die mindestens eine Öffnung können Gliederfüßer in den Innenraum gelangen, wo sie detektiert werden können. Die Wandungen und die mindestens eine Öffnung sind üblicherweise so gestaltet, dass Gliederfüßer leichter in den Innenraum gelangen als wieder heraus.

In einer Ausführungsform der vorliegenden Offenbarung werden keine Mittel zum Immobilisieren von Gliederfüßern verwendet, um Gliederfüßer zu detektieren.

Werden keine Mittel zum Immobilisieren von Gliederfüßern eingesetzt, um Gliederfüßer zu detektieren, können Maßnahmen ergriffen werden, um die Wahrscheinlichkeit erhöhen, dass sich Gliederfüßer in der Reichweite der Detektionseinheit aufhalten (z.B. Lockmittel) und/oder es können Sensoren verwendet werden, die die Anwesenheit eines Gliederfüßers in der Nähe einer Detektionseinheit erkennen und in einem solchen Fall eine Signalerfassung durch die Detektionseinheit initiieren.

In einer weiteren Ausführungsform der vorliegenden Offenbarung werden nur solche Mittel zum Immobilisieren von Gliederfüßern verwendet, die Gliederfüßer für eine begrenzte Zeitspanne und nicht dauerhaft in ihrer Bewegung einschränken.

Die Vorrichtung der vorliegenden Offenbarung umfasst eine Detektionseinheit.

Die Detektionseinheit ist eine Vorrichtung, mit der die Anwesenheit von Gliederfüßern in einem Gebiet festgestellt werden kann (Detektion von Gliederfüßern).

Das Gebiet befindet sich normalerweise im Freien, kann aber auch in einem Folientunnel (Foliengewächshaus) oder einem Gewächshaus sein.

Das Gebiet kann ein Feld für den Anbau von Kulturpflanzen sein oder ein solches umfassen. Das Gebiet kann mehrere Felder für den Anbau von Kulturpflanzen sein oder umfassen. Das Gebiet kann an ein oder mehrere Felder für den Anbau von Kulturpflanzen angrenzen. Das Gebiet kann ein Bereich innerhalb eines Feldes für den Anbau von Kulturpflanzen sein.

Unter dem Begriff "Kulturpflanze" wird eine Pflanze verstanden, die durch menschliches Eingreifen gezielt als Nutzpflanze angebaut wird. Der Begriff "Kulturpflanze" bezieht sich auf jede Pflanze, die von Menschen absichtlich für Lebensmittel, Futtermittel, Fasern, Holz, Duftstoffe, medizinische, hygienische und/oder andere wirtschaftliche Zwecke angebaut und kultiviert wird. Diese Pflanzen werden in der Regel speziell ausgewählt und bewirtschaftet, um einen Ertrag oder eine Ernte zu erzielen, und können eine Vielzahl von Arten umfassen, wie z.B. Getreide, Obst, Gemüse, Ölsaaten und Faserpflanzen. Teile der angebauten Nutzpflanze können für den menschlichen und/oder tierischen Verzehr geeignet sein. Auch Zierpflanzen und Algen fallen unter den Begriff "Kulturpflanze".

Der Begriff "Kulturpflanze" umfasst auch Deckfrüchte. Eine "Deckfrucht" ist eine Pflanze, die hauptsächlich zur Steuerung von Bodenerosion, Fruchtbarkeit, Qualität, Wasser, Unkraut, Schädlingen, Krankheiten, Biodiversität und/oder Wildtieren gepflanzt wird. Deckfrüchte werden in der Regel nicht für die direkte Ernte angebaut, sondern dienen dem Boden und/oder den nachfolgenden Kulturen. Sie werden in der Regel in der Nebensaison und/oder zwischen den regelmäßigen Pflanzungen von Kulturpflanzen gepflanzt. Deckfrüchte können dazu beitragen, Bodenerosion zu verhindern, die Bodengesundheit zu verbessern, den Anteil organischer Stoffe zu erhöhen, Unkraut zu unterdrücken und/oder den Bedarf an synthetischen Düngemitteln und/oder Pestiziden zu verringern. Darüber hinaus können sie die Biodiversität fördern, nützlichen Insekten Lebensraum bieten und/oder zu insgesamt nachhaltigen landwirtschaftlichen Praktiken beitragen. Zu den gängigen Deckfrüchten gehören Hülsenfrüchte wie Klee und Wicke, Gräser wie Roggen und Hafer sowie verschiedene andere Arten, je nach den spezifischen landwirtschaftlichen Zielen und/oder den örtlichen Bedingungen.

Das Gebiet kann eine Plantage sein oder umfassen oder daran angrenzen. Das Gebiet kann auch ein Wald oder ein Park sein oder umfassen oder daran angrenzen.

Das Gebiet kann ein Blühstreifen sein oder umfassen oder daran angrenzen. Ein Blühstreifen ist ein gezielt angelegter Streifen auf landwirtschaftlichen Flächen, der üblicherweise mit einer speziellen Mischung aus einheimischen Wildblumen, Kräutern und/oder teilweise auch Getreidearten bepflanzt wird. Diese Streifen bieten zahlreiche Vorteile sowohl für die Umwelt als auch für die Landwirtschaft. Blühstreifen bieten Lebensraum, Nahrung und/oder Nistplätze für eine Vielzahl von Tieren, insbesondere für Insekten wie Bienen, Hummeln und Schmetterlinge, aber auch für Vögel und kleine Säugetiere. Durch die Zunahme der Artenvielfalt wird das ökologische Gleichgewicht gestärkt. Die in den Blühstreifen lebenden Insekten können wichtige Bestäuber für umliegende landwirtschaftliche Kulturen sowie für Wildpflanzen sein. Eine erhöhte Anzahl von Bestäubern kann zu einer verbesserten Erntequalität und -quantität führen. Blühstreifen können die Ansiedlung von Nützlingen fördern, wie zum Beispiel bestimmte Insektenarten, die Schädlinge natürlich regulieren. Dies kann den Bedarf an chemischen Pflanzenschutzmitteln reduzieren und kann damit zu einem gesünderen Ökosystem beitragen. Die Pflanzen in den Blühstreifen können helfen, den Boden zu stabilisieren und/oder vor Erosion zu schützen. Die Pflanzen in den Blühstreifen können zur Verbesserung der Bodenstruktur und -fruchtbarkeit beitragen, indem sie als Gründüngung dienen und organische Materie in den Boden einbringen.

In einer Ausführungsform der vorliegenden Offenbarung befindet sich das Gebiet in einem oder in der Nähe eines Feldes für den Anbau von Kulturpflanzen. "In der Nähe" kann bedeuten, dass das Gebiet in einer Entfernung von einer Feldgrenze liegt, die nicht größer ist als beispielsweise 1 Meter oder 5 Meter oder 10 Meter oder 20 Meter oder 50 Meter oder 100 Meter oder 500 Meter.

In einer weiteren Ausführungsform der vorliegenden Offenbarung befindet sich das Gebiet in einem Gewächshaus.

In einer weiteren Ausführungsform der vorliegenden Offenbarung befindet sich das Gebiet in einem Folientunnel.

In einer weiteren Ausführungsform der vorliegenden Offenbarung handelt es sich bei dem Gebiet um eine städtische Region.

In einer weiteren Ausführungsform der vorliegenden Offenbarung handelt es sich bei dem Gebiet um ein nicht städtisches Gebiet, wie z.B. ein Naturschutzgebiet, einen Park, Wälder und/oder ein anderes Biom.

Die Detektion von Gliederfüßern kann prinzipiell auf verschiedene Weisen erfolgen, z.B. akustisch, optisch, chemisch und/oder durch genetische Analyse.

In einer Ausführungsform der vorliegenden Offenbarung erfolgt die Erkennung von Gliederfüßern auf akustischem Weg.

Manche Gliederfüßer erzeugen charakteristische Geräusche, die mit einem Mikrofon erfasst werden können. Gliederfüßer können auf verschiedene Weise Geräusche erzeugen, z.B. durch Stridulation (Reiben von Körperteilen aneinander), Tymbalation (Vibrieren einer Membran) und/oder durch die Bewegung ihrer Flügel während des Fluges. Geräusche, die von Gliederfüßern erzeugt werden, können verschiedenen Zwecken dienen, z.B. der Kommunikation, als Paarungsrufe und/oder als Abwehrmechanismus. Geräusche, die von Gliederfüßern erzeugt werden, können zur akustischen Erkennung von Gliederfüßern verwendet werden.

Zur akustischen Erkennung kann die Detektionseinheit ein oder mehrere Mikrofone umfassen. Dabei kann es sich um Mikrofone für Luftschall und/oder Vibrationssensoren (z.B. piezoelektrische Sensoren) für substratübertragene Vibrationen handeln. Mikrofone sind üblicherweise auf den Frequenzbereich der erwarteten akustischen Signale abgestimmt; spezielle Geräte wie Ultraschallmikrofone können beispielsweise verwendet werden, um Geräusche außerhalb des menschlichen Hörbereichs zu erfassen, da viele Gliederfüßer mit Ultraschallfrequenzen kommunizieren.

Nach der Aufnahme mit Hilfe eines oder mehrerer Mikrofone können die aufgenommenen Geräusche verstärkt und/oder gefiltert werden, um Geräusche von Gliederfüßern von Hintergrundgeräuschen zu isolieren. Filter können so eingestellt werden, dass sie sich auf bestimmte Frequenzen und/oder Frequenzbereiche konzentrieren, von denen bekannt ist, dass sie von Gliederfüßern verwendet werden und/oder stammen.

Die optional gefilterten und/oder verstärkten Signale können analysiert werden, um charakteristische Merkmale zu extrahieren. Dies kann die Identifizierung spezifischer Frequenzen, Muster und/oder Sequenzen umfassen, die für bestimmte Gliederfüßer charakteristisch sind.

In einer Ausführungsform der vorliegenden Offenbarung erfolgt die Erkennung von Gliederfüßern auf optischem Weg.

Die Detektion von Gliederfüßern kann auf Basis von Signalen erfolgen, die Gliederfüßer selbst erzeugen und/oder auf Basis von Signalen, die sich durch Wechselwirkung von Gliederfüßern mit elektromagnetischer Strahlung ergeben.

Bei der optischen Erkennung können verschiedene Wechselwirkungen von elektromagnetischer Strahlung mit Gliederfüßern genutzt werden, wie z.B. Reflexion, Brechung und/oder Fluoreszenz, um die Anwesenheit und charakteristische Merkmale von Gliederfüßern zu erkennen.

Gliederfüßer haben üblicherweise ein charakteristisches Erscheinungsbild. Ein solches Erscheinungsbild kann mittels einer optischen Kamera erfasst und festgehalten werden. Die Detektionseinheit kann also eine oder mehrere optische Kameras umfassen.

Eine "Kamera" ist eine Vorrichtung oder ein System, das dazu bestimmt ist, Bildaufnahmen von Objekten und/oder Phänomenen zu erfassen und aufzuzeichnen. Eine Kamera nutzt dazu beispielsweise elektromagnetische Strahlung, Schallwellen und/oder andere physikalische Vorgänge, die visuell dargestellt werden können. Die Kamera wandelt empfangene Signale (z.B. optische und/oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer und/oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt (optische Kamera). Üblicherweise handelt es sich um halbleiterbasierte Bildsensoren wie beispielsweise CCD- (CCD *= charge-coupled device*) oder CMOS-Sensoren (CMOS *= complementary metal-oxide-semiconductor*)*.* Optische Elemente wie Linsen, Blenden und dergleichen dienen einer möglichst scharfen Abbildung von Gliederfüßern auf dem Bildsensor. Eine Digitalkamera ist konfiguriert, digitale Bilder zu erzeugen.

Digitale Bilder können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bilder können mit geeigneten Anzeigegeräten visualisiert werden, wie zum Beispiel mit Computermonitoren, Projektoren und/oder Druckern.

Mittels einer oder mehreren optischen Kameras können Aufnahmen von einem Bereich in dem Gebiet, in dem Gliederfüßer vermutet werden, erzeugt werden. Dies kann mit Standard-Digitalkameras, speziellen Makroobjektiven für Nahaufnahmen und/oder Infrarot- und/oder Ultraviolettkameras erfolgen, die Details sichtbar machen können, die für das menschliche Auge nicht erkennbar sind. Bei fliegenden Gliederfüßern können Hochgeschwindigkeitskameras eingesetzt werden, um Bewegungen einzufrieren und klare Bilder aufzunehmen.

Die optische Erkennung erfordert die Anwesenheit einer Quelle für elektromagnetische Strahlung.

Diese Quelle für elektromagnetische Strahlung kann ein Gliederfüßer selbst sein. Einige Gliederfüßer verfügen über Leuchtorgane, die mittels Biolumineszenz charakteristische Leuchtsignale aussenden können, die oft arttypisch sind und sich in Länge und/oder Rhythmus und/oder Spektralbereich unterscheiden können.

Als elektromagnetische Strahlung kann auch Tageslicht (direktes und/oder reflektiertes und/oder gestreutes Sonnenlicht) und/oder Mond- und Sternenlicht verwendet werden. Neben den genannten natürlichen Quellen für elektromagnetische Strahlung können auch Quellen für künstliche elektromagnetische Strahlung eingesetzt werden. Verschiedene Beleuchtungstechniken wie z.B. Hintergrundbeleuchtung und/oder die Verwendung bestimmter Wellenlängen und/oder Spektralbereiche der elektromagnetischen Strahlung können die Sichtbarkeit von Gliederfüßern vor ihrem Hintergrund verbessern. Fluoreszierende Beleuchtung kann beispielsweise bestimmte Teile von Gliederfüßern zum Leuchten bringen und so die Erkennung erleichtern.

Optische Sensoren und/oder Scanner können die Umgebung scannen und Veränderungen in den Lichtmustern identifizieren, die durch die Anwesenheit von Gliederfüßern verursacht werden. Diese Sensoren können auf bestimmte Wellenlängen und/oder Lichtmuster eingestellt werden, von denen bekannt ist, dass sie von bestimmten Insektenarten reflektiert und/oder absorbiert werden.

Die von solchen Sensoren und/oder Scannern erfassten Signale können direkt zum Erkennen von Gliederfüßern verwendet werden und/oder die Erzeugung eines Bildes von dem Sammelbereich, in dem ein Gliederfüßer vermutet wird, triggern.

Aufgenommene Bilder können mithilfe von Computeralgorithmen verarbeitet werden, um Gliederfüßer zu erkennen und/oder zu identifizieren und/oder zu zählen. Bildverarbeitungstechniken können den Kontrast verbessern, bestimmte Farbbereiche isolieren und/oder Mustererkennung anwenden, um Gliederfüßer vom Hintergrund zu unterscheiden.

Gliederfüßer können auch mittels LiDAR (*Light Detection and Ranging*) erkannt werden. Die Detektionseinheit kann ein LiDAR-System sein oder ein solches umfassen.

LiDAR-Systeme senden Laser-Impulse aus und messen die Zeit, die die elektromagnetische Strahlung benötigt, um nach dem Auftreffen auf ein oder mehrere Objekte zurückzukehren. Diese Daten können verwendet werden, um detaillierte dreidimensionale Bilder des untersuchten Gebiets zu erstellen.

Bestandteile eines LiDAR-Systems sind ein Laser zum Aussenden von Laser-Impulsen und ein Sensor, der die von Objekten, einschließlich Gliederfüßern, zurückgeworfene elektromagnetische Strahlung erkennt.

Scanner und Positionierungssysteme können die Richtung und den Winkel der Laser-Impulse steuern. Sie ermöglichen es dem LiDAR-System, einen bestimmten Bereich oder ein bestimmtes Volumen zu scannen. Nachdem ein Laser-Impuls ausgesendet wurde und von Objekten, einschließlich Gliederfüßern, reflektiert wurde, kehrt er zum LiDAR-System zurück, wo er vom Sensor erfasst wird. LiDAR-Systeme können einzelne fliegende Gliederfüßer erkennen und verfolgen. Durch die Analyse der in den LiDAR-Daten erfassten Flugbahnen und/oder Flügelschlagfrequenzen können verschiedene Gliederfüßer unterschieden werden.

In einer Ausführungsform der vorliegenden Offenbarung erfolgt die Erkennung von Gliederfüßern durch genetische Analyse. Die Detektion von Gliederfüßern kann durch genetische Analyse von Proben aus dem Gebiet erfolgen. Das so genannte DNS/RNS-Metabarcoding kombiniert die Sequenzierung von DNS (Desoxyribonukleinsäre) und/oder RNS (Ribonukleinsäure) mit Bioinformatik, um verschiedene Spezies aus einer einzigen Umweltprobe zu identifizieren. Dieser Ansatz basiert auf der Analyse kurzer, standardisierter DNS- und/oder RNS-Abschnitte, die als "Barcodes" bezeichnet werden und für jede Art oder eine Gruppe eng verwandter Arten einzigartig sind. DNS-Metabarcoding ermöglicht die schnelle und gleichzeitige Identifizierung vieler Arten und kann damit zur gleichzeitigen Erkennung und Unterscheidung mehrerer Gliederfüßer eingesetzt werden.

Ein erster Schritt besteht darin, Proben in dem Gebiet (z.B. an verschiedenen Positionen in dem Gebiet) zu sammeln, aus denen DNS/RNS extrahiert werden kann. Für den Nachweis von Gliederfüßern können diese Proben Boden, Wasser, Luftfilter (für luftgetragene DNS/RNS), Pflanzenmaterial und/oder Sammelproben (Großproben) sein.

Anschließend kann aus den gesammelten Proben DNS und/oder RNS extrahiert werden. Bei diesem Verfahren werden die Zellen in der Probe aufgespalten, um die DNS und/oder RNS freizusetzen, die dann gereinigt und für die weitere Analyse konzentriert werden kann. Die extrahierte DNS/RNS kann einer Polymerase-Kettenreaktion (PCR) unterzogen werden, um die Barcode-Regionen der DNS/RNS selektiv zu vervielfältigen. Mithilfe von Primern - kurzen DNS oder RNS-Sequenzen, die zu den Regionen passen, die den Barcode flankieren - kann sichergestellt werden, dass nur die gewünschten Segmente vervielfältigt werden. Die DNS/RNS-Barcodes können dann mithilfe von Hochdurchsatz-Sequenzierungstechnologien sequenziert werden.

Für die DNS/RNS-Metabarcodierung kann auch die von Oxford Nanopore Technologies entwickelte Nanopore-Sequenzierung kann eingesetzt werden. Die Nanopore-Sequenzierung basiert auf der Erkennung von Veränderungen in der elektrischen Leitfähigkeit, wenn einzelne Moleküle von DNS oder RNS durch eine Nanopore in einer synthetischen Membran gelangen. Diese Technologie ermöglicht eine direkte Echtzeit-Sequenzierung langer DNS- und/oder RNS-Fragmente, ohne dass eine Amplifikation und/oder komplexe Probenvorbereitung erforderlich ist.

In einer Ausführungsform der vorliegenden Offenbarung erfolgt die Erkennung von Gliederfüßern durch chemische Analyse. Auch chemische Analysen können eingesetzt werden, um Gliederfüßer in einem Gebiet zu erkennen. Dabei können Umweltproben auf bestimmte Chemikalien untersucht werden, die auf das Vorhandensein, die Aktivität und/oder den Stoffwechsel von Gliederfüßern hinweisen.

Solche Chemikalien können beispielweise Pheromone sein. Pheromone sind u.a. von Gliederfüßern abgesonderte Chemikalien, die bei anderen Mitgliedern derselben Art bestimmte Verhaltensweisen auslösen; sie dienen z.B. zum Anlocken von Partnern.

Einige Gliederfüßer setzen im Rahmen ihrer Lebensprozesse, wie z.B. Paarung, Nahrungsaufnahme und/oder Verteidigung, spezifische flüchtige organische Verbindungen (VOCs: *volatile organic compounds*) frei. Die Analyse von Luftproben auf diese VOCs kann Hinweise auf das Vorhandensein solcher Gliederfüßer liefern. Zur Identifizierung und Quantifizierung dieser Verbindungen können Analysetechniken wie Gaschromatographie-Massenspektrometrie (GC-MS) eingesetzt werden.

Einige Gliederfüßer, wie z.B. Blattläuse, scheiden eine zuckerhaltige Substanz aus, die als Honigtau bekannt ist, wenn sie sich von Pflanzensaft ernähren. Das Vorhandensein von Honigtau z.B. auf Pflanzen kann auf die Anwesenheit von Gliederfüßern in dem Gebiet schließen lassen.

Bodenproben können auf chemische Marker untersucht werden, die auf Gliederfüßeraktivitäten hinweisen. So können bestimmte Gliederfüßer im Boden die chemische Zusammensetzung des Bodens durch ihre Ausscheidungen und/oder durch Beeinflussung des Zersetzungsprozesses verändern.

Gliederfüßer, die sich von Pflanzen ernähren, können als Abwehrmechanismus die Produktion spezifischer Chemikalien durch die Pflanze auslösen. Die Analyse von Pflanzengewebe oder der Umgebung auf diese Chemikalien kann auf das Vorhandensein von Gliederfüßern hinweisen, die sich von Pflanzen ernähren, auch wenn die Gliederfüßer selbst nicht direkt beobachtet werden.

Es können weitere Methoden zum Erkennen von Gliederfüßern in dem Gebiet eingesetzt werden. Es ist möglich, verschiedene Methoden miteinander zu kombinieren.

Die Detektionseinheit weist üblicherweise einen oder mehrere Sensoren auf, mit denen Gliederfüßer detektiert werden können.

Ein Sensor ist ein technisches Bauelement oder Gerät, das bestimmte physikalische und/oder chemische Eigenschaften und/oder Zustände (wie Temperatur, Feuchtigkeit, Druck, Helligkeit, Gaskonzentrationen usw.) erfassen und messen kann. Diese erfassten Größen werden in der Regel in elektrische Signale umgewandelt, die dann weiterverarbeitet, gespeichert und/oder angezeigt werden können.

Als Sensoren wurden in dieser Offenbarung beispielsweise Kamera, Mikrofon, LiDAR-Sensor, Gaschromatograph, Massenspektrometer und Nanotubes genannt. Weitere Sensoren sind denkbar.

Die Detektion von Gliederfüßern gemäß der vorliegenden Offenbarung erfolgt durch Erfassen von Signalen. Solche Signale werden üblicherweise von einem oder mehreren Sensoren geliefert. Solche Signale können digitalisiert werden. Solche Signale geben Auskunft über die Anwesenheit eines Gliederfüßers (oder mehrerer Gliederfüßer).

Ein solches Signal kann ein Bild sein, das von einer Kamera erzeugt wurde. In dem Bild kann mindestens ein Gliederfüßer abgebildet sein. Ein solches Signal kann ein Audiosignal sein. Das Audiosignal kann ein Geräusch umfassen, das von einem Gliederfüßer stammt. Ein solches Signal kann ein Reflexionssignal eines Laser-Pulses sein. Das Reflexionssignal kann ein Muster umfassen, das auf den Flügelschlag eines Gliederfüßers zurückgeführt werden kann. Ein solches Signal kann ein Chromatogramm und/oder Massenspektrum sein. Das Chromatogramm und/oder Massenspektrum können ein oder mehrere Banden aufweisen, die chemische Zusammensetzungen repräsentieren. Die chemischen Zusammensetzungen können Ausscheidungen von Gliederfüßern oder von Pflanzen in Reaktion auf Gliederfüßer anzeigen. Ein solches Signal kann eine oder mehrere Sequenzen von Nukleotiden sein. Eine solche Sequenz kann einen Teil des Erbguts eines Gliederfüßers repräsentieren. Weitere Arten von Signalen sind möglich.

Ein erfasstes Signal kann auf das Vorhandensein charakteristischer Merkmale untersucht werden, die einen oder mehrere Gliederfüßer anzeigen. Die Analyse von erfassten Signalen kann auch mit Hilfe eines Modells des maschinellen Lernens erfolgen.

Es ist möglich, dass die Detektionseinheit konfiguriert ist, kontinuierlich oder zu definierten Zeitpunkten oder in definierten Zeitabständen Signale zu erfassen. Die Detektionseinheit oder ein mit der Detektionseinheit verbundenes Computersystem kann konfiguriert sein, die erfassten Signale auf charakteristische Merkmale eines Gliederfüßers zu analysieren.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Heutige Computersysteme werden häufig in Desktop-PCs, tragbare PCs, Laptops, Notebooks, Netbooks und Tablet-PCs sowie sogenannte Handhelds (z. B. Smartphone) unterteilt; alle diese Systeme können für die Durchführung der hier beschriebenen computerimplementierten Verfahren verwendet werden.

Der Begriff "Computer" soll weit ausgelegt werden und jede Art von elektronischem Gerät mit Datenverarbeitungsfähigkeiten umfassen, einschließlich, als nicht einschränkende Beispiele, Personal Computer, Server, eingebettete Kerne, Kommunikationsgeräte, Prozessoren (z.B. digitale Signalprozessoren (DSP), Mikrocontroller, feldprogrammierbare Gate-Arrays (FPGA), anwendungsspezifische integrierte Schaltkreise (ASIC) usw.) und andere elektronische Rechengeräte.

Der Begriff "verarbeiten" soll jede Art von Berechnung oder Manipulation oder Umwandlung von Daten umfassen, die als physikalische, z.B. elektronische, Phänomene dargestellt werden und z.B. in Registern und/oder Speichern mindestens eines Computers oder Prozessors auftreten oder gespeichert werden können. Der Begriff "Prozessor" umfasst eine einzelne Verarbeitungseinheit oder eine Vielzahl verteilter oder entfernter solcher Einheiten.

Die Vorrichtung der vorliegenden Offenbarung umfasst üblicherweise eine Steuereinheit. Eine solche Steuereinheit dient üblicherweise der Steuerung der elektrischen/elektronischen Komponenten der Vorrichtung und/oder zum Verarbeiten von Signalen und/oder Daten. Die Steuereinheit umfasst üblicherweise eine Prozessoreinheit, einen Programmspeicher und einen Arbeitsspeicher. Die Steuereinheit kann ferner einen nicht-flüchtigen Datenspeicher umfassen, der beispielsweise als Halbleiterspeicher ausgeführt ist, und der zum Beispiel zum Speichern von Signalen und/oder von Ergebnissen von Analysen dienen kann. Die Steuereinheit kann konfiguriert sein, die Detektionseinheit zu definierten Zeitpunkten und/oder in definierten Zeitabständen und/oder bei Eintreten definierter Ereignisse zu veranlassen, Signale zu erfassen. Die Steuereinheit kann konfiguriert sein, eine oder mehrere Quellen für elektromagnetische Strahlung zu definierten Zeitpunkten und/oder in definierten Zeitabständen und/oder bei Eintreten definierter Ereignisse zu veranlassen, elektromagnetische Strahlung einer definierten spektralen Zusammensetzung zu erzeugen und/oder Muster auf den Sammelbereich zu projizieren. Die Steuereinheit kann konfiguriert sein, austauschbare Materialien im Sammelbereich zu wechseln. Die Steuereinheit kann konfiguriert sein, Signale, Analysenergebnisse, Geokoordinaten und/oder andere Informationen mit Hilfe einer Sendeeinheit an ein separates Computersystem zu übermitteln. Die Steuereinheit kann konfiguriert sein, Signale auf die Anwesenheit von charakteristischen Merkmalen von Gliederfüßern zu analysieren. Die Steuereinheit kann konfiguriert sein, einen Biodiversitätswert zu ermitteln.

Die Vorrichtung kann eine Sendeeinheit umfassen, um Informationen über ein Netzwerk an ein separates Computersystem zu übermitteln. Die Sendeeinheit kann so ausgestaltet sein, dass sie Informationen über ein Mobilfunknetz (z.B. GSM: *Global System for Mobile Communications,* GPRS: *General Packet Radio Service*; UMTS: *Universal Mobile Telecommunications System,* LTE: *Long Term Evolution*), über ein WLAN (*Wireless Local Artea Network*), über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

Die Vorrichtung kann eine Empfangseinheit umfassen, um Informationen über ein Netzwerk zu empfangen. Diese Informationen können Softwareupdates, Statusabfragen und/oder andere/weitere Informationen sein. Die Empfangseinheit kann so ausgestaltet sein, dass sie Informationen über ein Mobilfunknetz empfängt. Die Sendeeinheit und die Empfangseinheit können Bestandteile einer Sende- und Empfangseinheit sein.

Die Vorrichtung kann über Mittel zur Standortbestimmung verfügen. Diese Mittel können einen GPS-Empfänger (GPS: Globales Positionsbestimmungssystem) umfassen.

Die Vorrichtung weist üblicherweise Mittel zur Energieversorgung auf. In einer Ausführungsform der vorliegenden Offenbarung ist die Vorrichtung für einen autonomen Betrieb im Freien für einen Zeitraum von mehreren Tagen, Wochen, Monaten oder sogar Jahren hergerichtet. Die Mittel zur Energieversorgung umfassen z.B. eine oder mehrere elektrochemischen Zellen, Akkumulatoren, Solarzellen, Brennstoffzellen und/oder Generatoren (z.B. in Kombination mit einem Windrad).

Weitere Ausführungsformen der vorliegenden Offenbarung sind:
1. Eine Vorrichtung umfassend:
   - einen Sammelbereich und
   - eine Detektionseinheit zum Detektieren von Gliederfüßern in dem Sammelbereich;
   dadurch gekennzeichnet, dass der Sammelbereich so gestaltet ist, dass von dem Sammelbereich elektromagnetische Strahlung im infraroten, sichtbaren und/oder ultravioletten Bereich des elektromagnetischen Spektrums mit einer veränderlichen spektralen Zusammensetzung ausgesandt wird.
2. Die Vorrichtung gemäß der Ausführungsform 1, wobei der Sammelbereich so gestaltet ist, dass in verschiedenen Zeitspannen elektromagnetische Strahlung unterschiedlicher spektraler Zusammensetzung ausgesandt wird.
3. Die Vorrichtung gemäß einer der Ausführungsformen 1 oder 2, wobei der Sammelbereich so gestaltet ist, dass in einer ersten Zeitspanne elektromagnetische Strahlung einer ersten spektralen Zusammensetzung ausgesandet wird, und in einer zweiten Zeitspanne elektromagnetische Strahlung einer zweiten spektralen Zusammensetzung ausgesandt wird, wobei die erste spektrale Zusammensetzung verschieden von der zweiten spektralen Zusammensetzung ist.
4. Die Vorrichtung gemäß der Ausführungsform 3, wobei die erste Zeitspanne zeitlich auf die erste Zeitspanne folgt
5. Die Vorrichtung gemäß einer der Ausführungsformen 3 oder 4, wobei die erste Zeitspanne und/oder die zweite Zeitspanne eine Länge von einer oder mehreren Minuten oder von einer oder mehreren Stunden aufweisen.
6. Die Vorrichtung gemäß einer der Ausführungsformen 1 bis 5, wobei die veränderliche spektrale Zusammensetzung so gewählt ist, dass sie verschiedene Gliederfüßer anlockt.
7. Die Vorrichtung gemäß einer der Ausführungsformen 1 bis 6, wobei verschiedene spektrale Zusammensetzungen verschiedene Gliederfüßer anlocken.
8. Die Vorrichtung gemäß einer der Ausführungsformen 1 bis 7, wobei der Sammelbereich ein Bereich ist, in dem sich Gliederfüßer aufhalten können.
9. Die Vorrichtung gemäß einer der Ausführungsformen 1 bis 8, wobei der Sammelbereich ein Bereich ist, in dem sich Gliederfüßer aufhalten müssen, um von der Detektionseinheit erfasst zu werden.
10. Die Vorrichtung gemäß einer der Ausführungsformen 1 bis 9, wobei die Vorrichtung mehrere Sammelbereiche umfasst.
11. Die Vorrichtung gemäß Ausführungsform 10, wobei die mehreren Sammelbereiche in unterschiedliche Richtungen ausgerichtet sind und/oder für unterschiedliche Gliederfüßer bestimmt sind.
12. Die Vorrichtung gemäß einer der Ausführungsformen 1 bis 11, wobei der Sammelbereich eine Fläche umfasst.
13. Die Vorrichtung gemäß einer der Ausführungsformen 1 bis 12, wobei der Sammelbereich selbstleuchtend ist.
14. Die Vorrichtung gemäß einer der Ausführungsformen 1 bis 13, wobei der Sammelbereich eine selbstleuchtende Fläche umfasst.
15. Die Vorrichtung gemäß einer der Ausführungsformen 1 bis 14, wobei der Sammelbereich eine Ausdehnung im Bereich von 100 mm x 200 mm bis 250 mm x 250 mm hat.
16. Die Vorrichtung gemäß einer der Ausführungsformen 1 bis 15, wobei der Sammelbereich eine oder mehrere Quellen für elektromagnetische Strahlung umfasst.
17. Die Vorrichtung gemäß einer der Ausführungsformen 1 bis 16, wobei der Sammelbereich mehrere Quellen für elektromagnetische Strahlung umfasst, von denen jede Quelle elektromagnetische Strahlung einer anderen spektralen Zusammensetzung emittiert.
18. Die Vorrichtung gemäß einer der Ausführungsformen 1 bis 17, wobei die Vorrichtung einen Filter umfasst, wobei der Filter die spektrale Zusammensetzung von elektromagnetischer Strahlung verändert.
19. Die Vorrichtung gemäß einer der Ausführungsformen 1 bis 18, wobei die veränderliche spektrale Zusammensetzung der vom Sammelgebiet ausgesandten elektromagnetische Strahlung durch einen oder mehrere Filter erreicht wird.
20. Die Vorrichtung gemäß einer der Ausführungsformen 1 bis 19, wobei die vom Sammelbereich ausgesandte elektromagnetische Strahlung durch einen Filter gesandt wird.
21. Die Vorrichtung gemäß einer der Ausführungsformen 1 bis 20, wobei die vom Sammelbereich ausgesandte elektromagnetische Strahlung durch verschiedene Filter gesandt wird, um elektromagnetische Strahlung verschiedener spektraler Zusammensetzungen zu erzeugen.
22. Die Vorrichtung gemäß einer der Ausführungsformen 1 bis 21, wobei die vom Sammelbereich ausgesandte elektromagnetische Strahlung eine Folge einer Bestrahlung des Sammelbereichs mit elektromagnetischer Strahlung ist.
23. Die Vorrichtung gemäß einer der Ausführungsformen 1 bis 22, wobei die vom Sammelbereich ausgesandte elektromagnetische Strahlung auf Reflexion, Streuung und/oder Beugung zurückzuführen ist.
24. Die Vorrichtung gemäß einer der Ausführungsformen 1 bis 23, wobei die Vorrichtung eine oder mehrere Quellen für elektromagnetische Strahlung umfasst, die elektromagnetische Strahlung auf den Sammelbereich senden.
25. Die Vorrichtung gemäß einer der Ausführungsformen 1 bis 24, wobei die Vorrichtung mehrere Quellen für elektromagnetische Strahlung umfasst, von denen jede Quelle elektromagnetische Strahlung einer anderen spektralen Zusammensetzung auf den Sammelbereich sendet.
26. Die Vorrichtung gemäß einer der Ausführungsformen 1 bis 25, wobei die Vorrichtung eine Quelle für elektromagnetische Strahlung umfasst, die elektromagnetische Strahlung durch einen oder mehrere Filter auf den Sammelbereich sendet.
27. Die Vorrichtung gemäß einer der Ausführungsformen 1 bis 26, wobei die Vorrichtung eine Quelle für elektromagnetische Strahlung umfasst, die elektromagnetische Strahlung durch verschiedene Filter auf den Sammelbereich sendet, um elektromagnetische Strahlung verschiedener spektraler Zusammensetzungen zu erzeugen.
28. Die Vorrichtung gemäß einer der Ausführungsformen 1 bis 27, wobei der Sammelbereich austauschbare Materialien umfasst.
29. Die Vorrichtung gemäß Ausführungsform 28, wobei die Materialien unterschiedliche optische Eigenschaften aufweisen.
30. Die Vorrichtung gemäß einer der Ausführungsformen 28 oder 29, wobei die Materialien unterschiedliche Farbstoffe aufweisen.
31. Die Vorrichtung gemäß einer der Ausführungsformen 28 bis 30, wobei die Materialien unterschiedliche Beugungsstrukturen umfassen.
32. Die Vorrichtung gemäß einer der Ausführungsformen 28 bis 31, wobei die austauschbaren Materialien verschiedene Abschnitte einer Folie sind.
33. Die Vorrichtung gemäß einer der Ausführungsformen 1 bis 32, wobei der Sammelbereich ein Muster umfasst.
34. Die Vorrichtung gemäß Ausführungsform 33, wobei das Muster zeitlich veränderlich ist.
35. Die Vorrichtung gemäß einer der Ausführungsformen 33 oder 34, wobei das Muster auf den Sammelbereich projiziert wird.
36. Die Vorrichtung gemäß einer der Ausführungsformen 33 bis 35, wobei das Muster in den Sammelbereich eingebracht ist oder auf den Sammelbereich aufgebracht ist.
37. Die Vorrichtung gemäß einer der Ausführungsformen 1 bis 36, wobei die Detektionseinheit eine Kamera ist oder eine solche umfasst.
38. Die Vorrichtung gemäß einer der Ausführungsformen 1 bis 37, wobei die Detektionseinheit eine optische Kamera ist oder eine solche umfasst.
39. Verfahren umfassend
   - Positionieren einer Detektionseinheit zum Detektieren von Gliederfüßern in einem Gebiet;
   - Erfassen von Signalen eines oder mehrerer Gliederfüßer in einem Sammelbereich mit Hilfe der Detektionseinheit;
   - Detektieren und/oder Identifizieren und/oder Zählen der Gliederfüßer in dem Sammelbereich und/oder Ermitteln eines Biodiversitätswerts anhand der erfassten Signale;
   dadurch gekennzeichnet, dass der Sammelbereich so gestaltet ist, dass von dem Sammelbereich elektromagnetische Strahlung im infraroten, sichtbaren und/oder ultravioletten Bereich des elektromagnetischen Spektrums mit einer veränderlichen spektralen Zusammensetzung ausgesandt wird.
40. Das Verfahren gemäß Ausführungsform 39, wobei das Gebiet ein Feld für den Anbau von Kulturpflanzen ist oder ein solches umfasst oder an ein solches angrenzt.
41. Das Verfahren gemäß einer der Ausführungsformen 39 oder 40, wobei das Gebiet ein Feld für den Anbau von Kulturpflanzen ist oder ein solches umfasst oder an ein solches angrenzt.
42. Das Verfahren gemäß einer der Ausführungsformen 39 bis 41, wobei das Gebiet ein Feld für den Anbau von Kulturpflanzen ist oder ein solches umfasst oder an ein solches angrenzt.
43. Das Verfahren gemäß einer der Ausführungsformen 39 bis 42, wobei das Gebiet ein Blühstreifen ist oder einen solchen umfasst oder an einen solchen angrenzt.
44. Das Verfahren gemäß einer der Ausführungsformen 39 bis 43, wobei das Gebiet eine städtische Region ist oder umfasst oder an eine solche angrenzt.
45. Das Verfahren gemäß einer der Ausführungsformen 39 bis 44, wobei das Gebiet ein Naturschutzgebiet ist oder umfasst oder an ein solches angrenzt.
46. Das Verfahren gemäß einer der Ausführungsformen 39 bis 45, wobei das Gebiet ein Gewächshaus ist oder ein solches umfasst.
47. Das Verfahren gemäß einer der Ausführungsformen 39 bis 41, wobei das Gebiet ein Folientunnel ist oder einen solchen umfasst.
48. Das Verfahren gemäß einer der Ausführungsformen 39 bis 47, wobei das Positionieren der Detektionseinheit umfasst:
   - Positionieren einer Vorrichtung gemäß einer der Ansprüche 1 bis 13 in dem Gebiet.
49. Verwendung der Vorrichtung gemäß einer der Ausführungsformen 1 bis 38 zum Detektieren und/oder Identifizieren und/oder Zählen von Gliederfüßern und/oder zum Detektieren und/oder Identifizieren und/oder Zählen von Schadorganismen und/oder zum Detektieren und/oder Identifizieren und/oder Zählen von Nützlingen und/oder zum Ermitteln eines Biodiversitätswerts.

Die Vorrichtung der vorliegenden Offenbarung wird üblicherweise in dem Gebiet positioniert. Es ist möglich, dass mehrere Vorrichtungen in dem Gebiet positioniert werden.

Die Vorrichtung kann in dem Gebiet aufgestellt und/der aufgehängt oder anderweitig fixiert werden. Die Vorrichtung kann ein Stativ umfassen, um die Vorrichtung in einer definierten Höhe zu positionieren und/oder in definierter Weise gegenüber der Umgebung auszurichten.

Die Vorrichtung der vorliegenden Offenbarung kann zum Detektieren und/oder Identifizieren und/oder Zählen von Gliederfüßern verwendet werden.

Die Vorrichtung der vorliegenden Offenbarung kann verwendet werden, um Schadorganismen zu detektieren und/oder identifizieren und/oder zählen.

Die Vorrichtung der vorliegenden Offenbarung kann verwendet werden, um Nützlinge zu detektieren und/oder identifizieren und/oder zählen.

Die Vorrichtung der vorliegenden Offenbarung kann verwendet werden, um einen Biodiversitätswert zu ermitteln.

Der Begriff Biodiversität, wie er in dieser Offenbarung verwendet wird, kann sich auf die Vielfalt lebender Organismen in dem Gebiet beziehen. Zur Ermittlung eines Biodiversitätswerts, der die Biodiversität in dem Gebiet angibt, kann die Vielfalt von Gliederfüßern in dem Gebiet ermittelt werden. Sie kann als ein Maß für die Biodiversität in dem Gebiet dienen. Je größer die Vielfalt von Gliederfüßern in einem Gebiet ist, desto größer ist üblicherweise auch die Vielfalt von anderen Organismen und umgekehrt.

## Patentansprüche

1. Eine Vorrichtung umfassend:
- einen Sammelbereich und
- eine Detektionseinheit zum Detektieren von Gliederfüßern in dem Sammelbereich;
**dadurch gekennzeichnet, dass** der Sammelbereich so gestaltet ist, dass von dem Sammelbereich elektromagnetische Strahlung im infraroten, sichtbaren und/oder ultravioletten Bereich des elektromagnetischen Spektrums mit einer veränderlichen spektralen Zusammensetzung ausgesandt wird.

2. Vorrichtung gemäß Anspruch 1, wobei der Sammelbereich so gestaltet ist, dass in einer ersten Zeitspanne elektromagnetische Strahlung einer ersten spektralen Zusammensetzung ausgesandet wird, und in einer zweiten Zeitspanne elektromagnetische Strahlung einer zweiten spektralen Zusammensetzung ausgesandt wird, wobei die erste spektrale Zusammensetzung verschieden von der zweiten spektralen Zusammensetzung ist, wobei die erste Zeitspanne zeitlich auf die erste Zeitspanne folgt und die erste Zeitspanne und/oder die zweite Zeitspanne eine Länge von einer oder mehreren Minuten oder von einer oder mehreren Stunden aufweisen.

3. Vorrichtung gemäß Anspruch 2, wobei verschiedene spektrale Zusammensetzungen verschiedene Gliederfüßer anlocken.

4. Vorrichtung gemäß Anspruch 3, wobei der Sammelbereich eine selbstleuchtende Fläche umfasst.

5. Vorrichtung gemäß Anspruch 4, wobei der Sammelbereich mehrere Quellen für elektromagnetische Strahlung umfasst, von denen jede Quelle elektromagnetische Strahlung einer anderen spektralen Zusammensetzung emittiert.

6. Vorrichtung gemäß einem der Ansprüche 4 oder 5, wobei die vom Sammelbereich ausgesandte elektromagnetische Strahlung durch verschiedene Filter gesandt wird, um elektromagnetische Strahlung verschiedener spektraler Zusammensetzungen zu erzeugen.

7. Vorrichtung gemäß einem der Ansprüche 2 bis 6, wobei die Vorrichtung eine oder mehrere Quellen für elektromagnetische Strahlung umfasst, die den Sammelbereich mit elektromagnetischer Strahlung bestrahlen, wobei die vom Sammelbereich ausgesandte elektromagnetische Strahlung eine Folge der Bestrahlung des Sammelbereichs mit elektromagnetischer Strahlung ist, wobei die vom Sammelbereich ausgesandte elektromagnetische Strahlung auf Reflexion, Streuung und/oder Beugung zurückzuführen ist.

8. Vorrichtung gemäß Anspruch 7, wobei die Vorrichtung mehrere Quellen für elektromagnetische Strahlung umfasst, von denen jede Quelle elektromagnetische Strahlung einer anderen spektralen Zusammensetzung auf den Sammelbereich sendet.

9. Vorrichtung gemäß Anspruch 7, wobei die Vorrichtung eine Quelle für elektromagnetische Strahlung umfasst, die elektromagnetische Strahlung durch verschiedene Filter auf den Sammelbereich sendet, um elektromagnetische Strahlung verschiedener spektraler Zusammensetzungen zu erzeugen.

10. Vorrichtung gemäß einem der Ansprüche 2 bis 9, wobei der Sammelbereich austauschbare Materialien umfasst, wobei die austauschbaren Materialien unterschiedliche optische Eigenschaften aufweisen, wobei die austauschbaren Materialien unterschiedliche Farbstoffe aufweisen und/oder unterschiedliche Beugungsstrukturen umfassen.

11. Vorrichtung gemäß Anspruch 10, wobei die austauschbaren Materialien verschiedene Abschnitte einer Folie sind.

12. Vorrichtung gemäß einem der Ansprüche 2 bis 11, wobei der Sammelbereich ein zeitlich veränderliches Muster umfasst, wobei das Muster auf den Sammelbereich projiziert wird und/oder in den Sammelbereich eingebracht ist oder auf den Sammelbereich aufgebracht ist.

13. Vorrichtung gemäß einem der Ausführungsformen 2 bis 12, wobei die Detektionseinheit eine Kamera ist oder eine solche umfasst.

14. Verfahren umfassend
- Positionieren einer Detektionseinheit zum Detektieren von Gliederfüßern in einem Gebiet;
- Erfassen von Signalen eines oder mehrerer Gliederfüßer in einem Sammelbereich mit Hilfe der Detektionseinheit;
- Detektieren und/oder Identifizieren und/oder Zählen der Gliederfüßer in dem Sammelbereich und/oder Ermitteln eines Biodiversitätswerts anhand der erfassten Signale;
**dadurch gekennzeichnet, dass** der Sammelbereich so gestaltet ist, dass von dem Sammelbereich elektromagnetische Strahlung im infraroten, sichtbaren und/oder ultravioletten Bereich des elektromagnetischen Spektrums mit einer veränderlichen spektralen Zusammensetzung ausgesandt wird.

15. Verfahren gemäß Anspruch 14, wobei das Positionieren der Detektionseinheit umfasst:
- Positionieren einer Vorrichtung gemäß einer der Ansprüche 1 bis 13 in dem Gebiet.

16. Verfahren gemäß Anspruch 15, wobei das Gebiet ein Feld für den Anbau von Kulturpflanzen ist oder ein solches umfasst oder an ein solches angrenzt, oder ein Feld für den Anbau von Kulturpflanzen ist oder ein solches umfasst oder an ein solches angrenzt, oder ein Feld für den Anbau von Kulturpflanzen ist oder ein solches umfasst oder an ein solches angrenzt, oder ein Blühstreifen ist oder einen solchen umfasst oder an einen solchen angrenzt, oder eine städtische Region ist oder umfasst oder an eine solche angrenzt, oder t ein Naturschutzgebiet ist oder umfasst oder an ein solches angrenzt, oder ein Gewächshaus ist oder ein solches umfasst, oder ein Folientunnel ist oder einen solchen umfasst.

17. Verwendung der Vorrichtung gemäß einer der Ansprüche 1 bis 13 zum Detektieren und/oder Identifizieren und/oder Zählen von Gliederfüßern und/oder zum Detektieren und/oder Identifizieren und/oder Zählen von Schadorganismen und/oder zum Detektieren und/oder Identifizieren und/oder Zählen von Nützlingen und/oder zum Ermitteln eines Biodiversitätswerts.

## Geänderte Patentansprüche

### Geänderte Patentansprüche gemäss Regel 137(2) EPÜ.

1. Eine Vorrichtung umfassend:
- einen Sammelbereich und
- eine Detektionseinheit zum Detektieren von Gliederfüßern in dem Sammelbereich, wobei die Detektionseinheit eine Kamera ist oder eine solche umfasst;
**dadurch gekennzeichnet, dass** der Sammelbereich so gestaltet ist, dass von dem Sammelbereich elektromagnetische Strahlung im infraroten, sichtbaren und/oder ultravioletten Bereich des elektromagnetischen Spektrums mit einer veränderlichen spektralen Zusammensetzung ausgesandt wird, wobei der Sammelbereich mehrere Quellen für elektromagnetische Strahlung umfasst, von denen jede Quelle elektromagnetische Strahlung einer anderen spektralen Zusammensetzung emittiert, wobei der Sammelbereich so gestaltet ist, dass in einer ersten Zeitspanne elektromagnetische Strahlung einer ersten spektralen Zusammensetzung ausgesandet wird, und in einer zweiten Zeitspanne elektromagnetische Strahlung einer zweiten spektralen Zusammensetzung ausgesandt wird, wobei die erste spektrale Zusammensetzung verschieden von der zweiten spektralen Zusammensetzung ist, wobei die zweite Zeitspanne zeitlich auf die erste Zeitspanne folgt und die erste Zeitspanne und die zweite Zeitspanne eine Länge von einer oder mehreren Minuten oder von einer oder mehreren Stunden aufweisen.

2. Vorrichtung gemäß Anspruch 1, wobei verschiedene spektrale Zusammensetzungen verschiedene Gliederfüßer anlocken.

3. Vorrichtung gemäß Anspruch 2, wobei der Sammelbereich eine selbstleuchtende Fläche umfasst.

4. Verfahren umfassend
- Positionieren einer Vorrichtung gemäß einer der Ansprüche 1 bis 3 in einem Gebiet;
- Erfassen von Signalen eines oder mehrerer Gliederfüßer dem Sammelbereich mit Hilfe der Detektionseinheit;
- Detektieren und/oder Identifizieren und/oder Zählen der Gliederfüßer in dem Sammelbereich und/oder Ermitteln eines Biodiversitätswerts anhand der erfassten Signale.

5. Verfahren gemäß Anspruch 4, wobei das Gebiet ein Feld für den Anbau von Kulturpflanzen ist oder ein solches umfasst oder an ein solches angrenzt, oder ein Blühstreifen ist oder einen solchen umfasst oder an einen solchen angrenzt, oder eine städtische Region ist oder umfasst oder an eine solche angrenzt, oder ein Naturschutzgebiet ist oder umfasst oder an ein solches angrenzt, oder ein Gewächshaus ist oder ein solches umfasst, oder ein Folientunnel ist oder einen solchen umfasst.

6. Verwendung der Vorrichtung gemäß einem der Ansprüche 1 bis 3 zum Detektieren und/oder Identifizieren und/oder Zählen von Gliederfüßern und/oder zum Detektieren und/oder Identifizieren und/oder Zählen von Schadorganismen und/oder zum Detektieren und/oder Identifizieren und/oder Zählen von Nützlingen und/oder zum Ermitteln eines Biodiversitätswerts.
